Europäisches Patentamt

(19) European Patent Office

Office européen des brevets

(11) Numéro de publication: **0 064 430**
**B1**

(12) **FASCICULE DE BREVET EUROPEEN**

(45) Date de publication du fascicule du brevet: 07.01.87

(51) Int. Cl.⁴: **G 21 C 7/16, G 21 C 7/10**

(21) Numéro de dépôt: 82400612.6

(22) Date de dépôt: 02.04.82

(54) **Barre absorbante pour réacteur nucléaire.**

(30) Priorité: 09.04.81 FR 8107154

(43) Date de publication de la demande:
10.11.82 Bulletin 82/45

(45) Mention de la délivrance du brevet:
07.01.87 Bulletin 87/02

(84) Etats contractants désignés:
BE DE GB IT

(56) Documents cités:
FR-A-1 415 304
FR-A-2 070 797
FR-E- 83 296
GB-A-1 140 010
US-A-3 933 581

(73) Titulaire: COMMISSARIAT A L'ENERGIE
ATOMIQUE Etablissement de Caractère
Scientifique Technique et Industriel
31/33, rue de la Fédération
F-75015 Paris (FR)

(72) Inventeur: Kayser, Gaston
Les Crones - Couteran
F-13100 Aix-en-Provence (FR)
Inventeur: Arslan, Marc
4, Place Henri Barbusse Le Cèdre - C8
F-92360 Le Plessis-Robinson (FR)

(74) Mandataire: Mongrédien, André et al
c/o BREVATOME 25, rue de Ponthieu
F-75008 Paris (FR)

Courier Press, Leamington Spa, England.

## Description

La présente invention se rapporte à une barre absorbante prévue pour être introduite dans le coeur d'un réacteur nucléaire pour abaisser la réactivité. Plus précisément, l'invention se rapporte à une barre absorbante permettant d'introduire pratiquement instantanément de l'antiréactivité dans le coeur du réacteur dans le cas où une diminution importante du débit de fluide de refroidissement se produit dans le coeur sans que se produise une chute des barres.

Dans les réacteurs nucléaires existant à ce jour et notamment dans les réacteurs nucléaires à neutrons rapides, lorsqu'un accident de débit se produit et avant que ne réagisse le système d'arrêt du réacteur, (défaillance de ce système ou temps de réponse trop long) le comportement dynamique du réacteur est gouverné par les différents effets de contre réaction. Parmi ceux-ci, un effet important est dû aux dilatations différentielles qui se produisent entre les tiges des barres absorbantes et la cuve du réacteur. En effet, la constante de temps de la cuve étant importante vis-à-vis de celle des tiges des barres absorbantes, toute élévation de température à la sortie du coeur résultant d'une diminution du débit du fluide primaire déplace la partie absorbante des barres vers l'intérieur du coeur, et introduit ainsi, à court terme, de l'antiréactivité.

Toutefois, la constante de temps des tiges des barres absorbantes existantes est de l'ordre de la minute, de sorte que la dilatation des barres ne joue un rôle efficace que dans les transitoires lents, c'est-à-dire notamment lorsque l'alimentation électrique des moteurs commandant les pompes est défaillante et si l'inertie des pompes est élevée (également de l'ordre de la minute). En revanche, l'antiréactivité introduite dans le coeur du réacteur par la dilatation des barres absorbantes n'est pas suffisamment rapide se l'inertie des pompes est faible et n'a aucun effet dans les séquences très rapides telles que les ruptures des canalisations reliant les pompes au sommier d'alimentation du coeur ou le grippage des pompes. Dans ces dernières séquences, la rapidité de l'accident peut être telle que le système d'arrêt, même s'il fonctionne correctement peut avoir un temps de réponse tel qu'un échauffement important se produise déjà à la sortie du coeur avant que ledit système n'ait eu le temps d'agir.

Un système d'arrêt dans lequel la chute des barres absorbantes est commandée par le fluide de refroidissement sous pression d'un réacteur nucléaire utilisant un tel fluide est décrit dans le brevet FR—A—1 415 304.

La présente invention a pour objet une barre absorbante ne présentant pas les inconvénients des barres absorbantes de la technique antérieure et comportant notamment une constante de temps de dilatation très réduite permettant d'introduire de l'antiréactivité dans le coeur du réacteur de façon presque instantanée.

A cet effet, il est proposé de lier directement l'allongement de la barre absorbante à un effet hydraulique produit par la variation du débit, et non à la conséquence thermique de cette variation de débit, qui est forcément beaucoup plus lente.

Ainsi, conformément à la présente invention, il est proposé une barre absorbante prévue pour être introduite dans le coeur d'un réacteur nucléaire pour abaisser la réactivité, ladite barre comprenant un corps de barre contenant une partie absorbante et une tête de barre par laquelle le corps de barre peut être suspendu à un mécanisme de pilotage apte à commander la montée et la descente de la barre absorbante dans le coeur, ainsi que le décrochage de la barre absorbante, permettant la chute de cette dernière dans le coeur, caractérisé en ce que le corps de barre est mobile par rapport à la tête de barre et relié à cette dernière par des moyens de liaison par sustentation dont l'effet combiné à celui de la résistance hydraulique du corps de barre fait correspondre à chaque valeur du débit du fluide dans le coeur une position relative bien déterminée entre le corps de barre et la tête de barre, cette position du corps de barre étant d'autant plus élevée, c'est à dire corps d'autant plus rapproché de la tête, que le débit est important.

Grâce à ces caractéristiques, on voit que le corps de la barre absorbante est maintenu normalement dans une position haute lorsque le débit du fluide présente sa valeur nominale correspondant au fonctionnement normal du réacteur et que le corps de la barre absorbante se déplace vers le base pour diminuer la réactivité dès que le débit du fluide de refroidissement diminue suffisamment pour que la force exercée par le fluide sur le corps de barre devienne insuffisante pour le maintenir en position haute.

Conformément à un premier mode de réalisation de l'invention, lesdits moyens de liaison par sustentation sont mécaniques et comprennent des moyens élastiques prévus entre la tête et le corps de barre pour déplacer ce dernier vers le haut à l'encontre de la force de gravité résultant du poids, du corps de barre, entre une position basse c'est à dire tête eloignée du corps et une position haute c'est à dire tête rapprochée du corps selon que le débit du fluide dans le coeur est nul ou atteint sa valeur nominale.

Ces moyens élastiques peuvent être constitués soit par un ressort hélicoïdal travaillant à la traction ou à la compression, soit par un ressort hélicoïdal double comprenant a la fois une partie qui travaille à la compression et une partie qui travaille à la traction.

Dans ce premier mode de réalisation, le déplacement vertical du corps de la barre absorbante peut être amorti en logeant les moyens élastiques dans un espace rempli de fluide de refroidissement formant amortisseur.

Conformément à un deuxième mode de réalisation de l'invention, les moyens de liaison par sustentation sont hydrauliques et comprennent au moins un passage dans lequel circule le fluide de refroidissement en aval de ladite surface, la section de ce passage allant en diminuant lorsque le corps de barre se déplace vers le bas par rapport à la tête de barre. Ce passage peut notamment être défini soit entre deux surfaces coniques formées respectivement sur la tête et sur le corps de la barre absorbante, soit par des ouvertures oblongues en vis-à-vis formées respectivement dans une portion cylindrique de la tête et dans une portion cylindrique du corps de la barre absorbante.

Afin d'éviter un soulèvement de la barre en situation d'arrêt du réacteur, lors d'une accélération des pompes, on peut adapter sur le corps de barre des aménagements hydrauliques qui diminuent la force de soulèvement hydraulique lorsque la barre est en position basse. Dans un tel aménagement, la perte de charge à l'entrée du corps de barre est diminuée par la présence d'un évasement à la partie inférieure du fourreau recevant ladite barre.

On décrira maintenant, à titre d'exemple non limitatif, différents modes de réalisation de la présente invention en se référant aux dessins annexés dans lesquels:

— la figure 1a représente de façon schématique une barre absorbante selon l'invention, maintenue en position-haute au-dessus du coeur du réacteur par les moyens de pilotage de la barre;
— la figure 1b est une vue d'ensemble, en coupe schématique et à plus grande échelle de la barre absorbante de la figure 1a, illustrant un premier mode de réalisation de l'invention,
— la figure 2 est une vue à plus grande échelle représentant la tête de la barre absorbante de la figure 1a et la partie supérieure du corps de cette barre, le corps de la barre absorbante étant en liaison avec la tête par un ressort hélicoïdal conformément au premier mode de réalisation de l'invention,
— la figure 3 est une vue en coupe schématique comparable à la figure 2 représentant une variante de réalisation de l'invention dans laquelle le corps de la barre absorbante est en liaison avec la tête de barre par un ressort hélicoïdal double,
— la figure 4 est une vue en coupe schématique de la partie supérieure d'une barre absorbante réalisée conformément à un deuxième mode de réalisation de l'invention selon lequel le fluide de refroidissement s'écoule dans un passage de section réduite défini entre deux surfaces coniques formées respectivement sur le corps et sur la tête de la barre absorbante,
— la figure 5 est une vue en coupe comparable à la figure 4 représentant une variante du mode de réalisation représenté sur cette figure, dans laquelle le passage de section réduite est défini par des ouvertures oblongues formées dans deux parties tubulaires solidaires respectivement de la tête et du corps de la barre absorbante, et
— la figure 6 est une vue en coupe schématique qui représente la partie inférieure d'une barre absorbante du type représenté sur l'une quelconque des figures 2, 3, 4 et 5 et la partie correspondante de l'assemblage du coeur dans lequel est reçue cette barre.

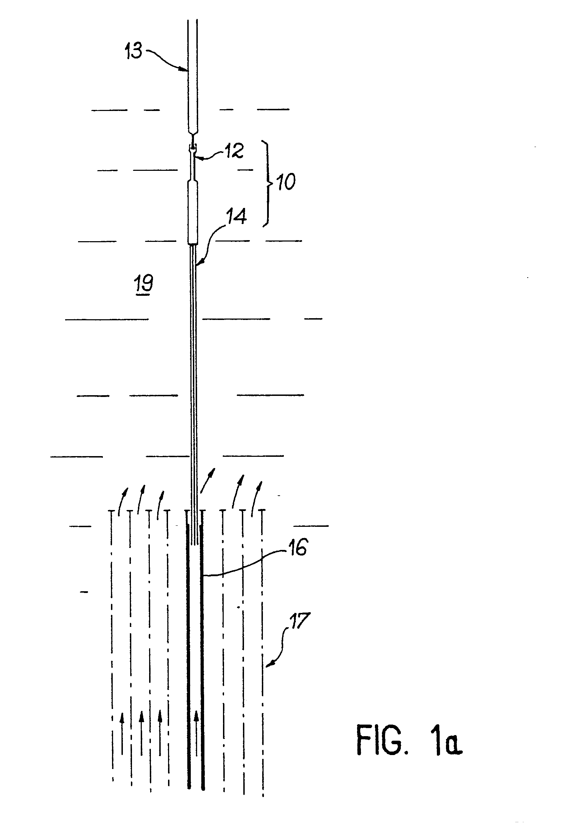

On voit sur la figure 1a que la barre absorbante 10 selon l'invention est normalement suspendue par sa tête 12 à un mécanisme de pilotage représente schématiquement en 13.

Ce mécanisme 13 est bien connu et ne sera pas décrit plus en détail. On rappelera simplement qu'il permet, d'une part, de piloter le réacteur et, d'autre part, de commander l'arrêt du réacteur. Dans la fonction de pilotage du réacteur, la barre absorbante 10 est accrochée au mécanisme 13 comme l'illustre la figure 1a, et ce dernier permet de monter et de descendre à volonté la barre dans le coeur du réacteur représenté partiellement en 17. Au contraire, lorsqu'on doit commander l'arrêt en sécurité du réacteur, le mécanisme 13 commande le décrochage de la barre absorbante 10, de sorte que l'ensemble constitué par la tête 12 et le corps 14 de la barre chute dans le coeur 17. On voit aussi sur la figure 1a que la barre 10 coulisse dans un fourreau 16 placé dans le coeur du réacteur, ce dernier pouvant notamment être un réacteur à neutrons rapides refroidi par un métal liquide 19 tel que du sodium.

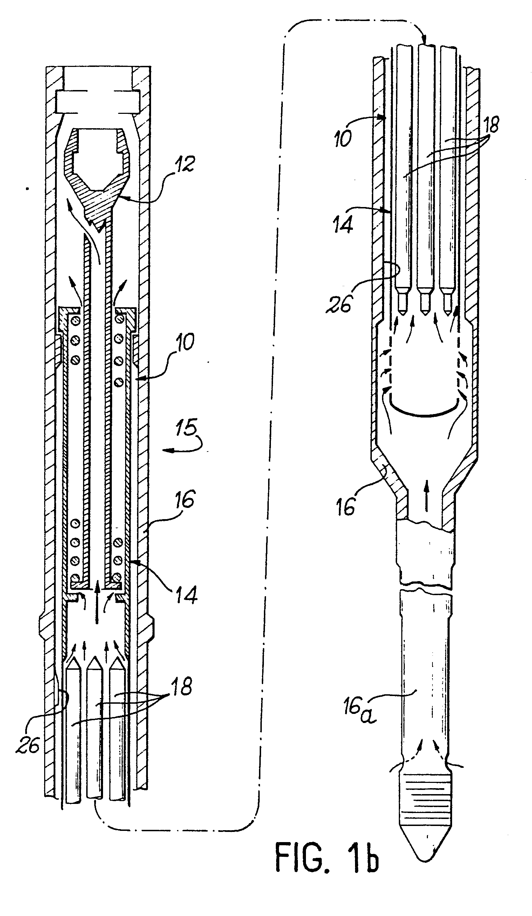

On a représenté sur les moitiés gauche et droite de la figure 1b la partie supérieure et la partie inférieure de la barre absorbante 10. Cette barre 10 est reçue dans un alésage 26 du fourreau 16. Le fourreau 16 se termine à son extrémité inférieure par un pied 16a destiné à être reçu dans le sommier de supportage du coeur et à assurer l'alimentation du fourreau en fluide de refroidissement tel que du sodium liquide dans un réacteur à neutrons rapides. Le corps 14 de la barre absorbante présente une configuration tubulaire et contient sur la majeure partie de sa hauteur une partie absorbante 18 dont la descente dans l'alésage 26 du fourreau 16 permet de diminuer la réactivité dans le coeur du réacteur. Pour permettre la circulation du fluide vers le haut dans le fourreau 16, la partie absorbante se compose d'un certain nombre d'éléments séparés comme le montre la figure 1b.

Dans les barres absorbantes de la technique antérieure, la tête et le corps de la barre sont généralement réalisés en une seule pièce, de sorte que la seule possibilité de déplacement de la partie absorbante par rapport au coeur résulte de la dilatation de la tige reliant habituellement ces deux parties ainsi que de la dilatation de la tige reliant la tête de la barre aux mécanismes situés au-dessus de la dalle. Ainsi, en cas de défaillance des moyens permettant normalement d'arrêter la réaction de fission dans le coeur du réacteur ou avant qu'ils n'aient pu entrer en action (chute de barres absorbantes), un échauffement du coeur du réacteur résultant notamment d'un arrêt ou d'un grippage des pompes primaires ou d'une rupture des conduites par lesquelles les pompes injectent le fluide de refroidissement dans le sommier d'alimentation du coeur, a pour conséquence une dilatation des tiges des barres absorbantes prépondérante par rapport à la dilatation de la cuve. Cette dilatation conduit à faire descendre légèrement la partie absorbante de chacune des barres dans le coeur du réacteur, ce qui permet d'abaisser la réactivité dans ce dernier.

Toutefois, on a déjà indiqué que la constante de temps correspondant à la dilatation des barres absorbantes n'est pas négligeable puisqu'elle est généralement voisine d'une minute. Si ce délai est suffisamment court lorsque le débit du fluide primaire dans le coeur du réacteur décroît graduellement comme c'est notamment le cas lorsque l'accident de débit résulte d'un défaut d'alimentation électrique des moteurs des pompes et si ces dernières possèdent une inertie élevée ce délai est trop long lorsque le débit dans le coeur du réacteur chute brutalement comme c'est notamment le cas si l'inertie des pompes est faible ou lorsque l'accident de débit résulte d'un grippage des pompes ou d'une rupture des canalisations par lesquelles le fluide primaire est injecté dans le sommier d'alimentation du coeur du réacteur. Dans ce dernier cas d'ailleurs, même si le système d'arrêt du réacteur fonctionne correctement, son délai de réponse peut être tel qu'un échauffement important se produise déjà à la sortie du coeur avant que ledit système n'entre en action.

Conformément à la présente invention, on remédie à ces inconvénients en rendant le corps 14 de la barre absorbante mobile par rapport à la tête 12, en plaçant entre ces deux pièces des moyens de liaison par sustentation 15 et en créant dans le corps 14 une résistance hydraulique sensible au débit du fluide primaire dans le coeur du réacteur. Plus précisément, il est proposé d'utiliser le débit du fluide primaire qui se déplace de bas en haut dans le coeur du réacteur pour soulever normalement le corps 14 par rapport à la tête 12 lorsque ce débit atteint sa valeur nominale, les moyens de liaison 15 qui sont prévus entre la tête et le corps de la barre absorbante permettant de rendre ce dernier stationnaire pour un débit donné.

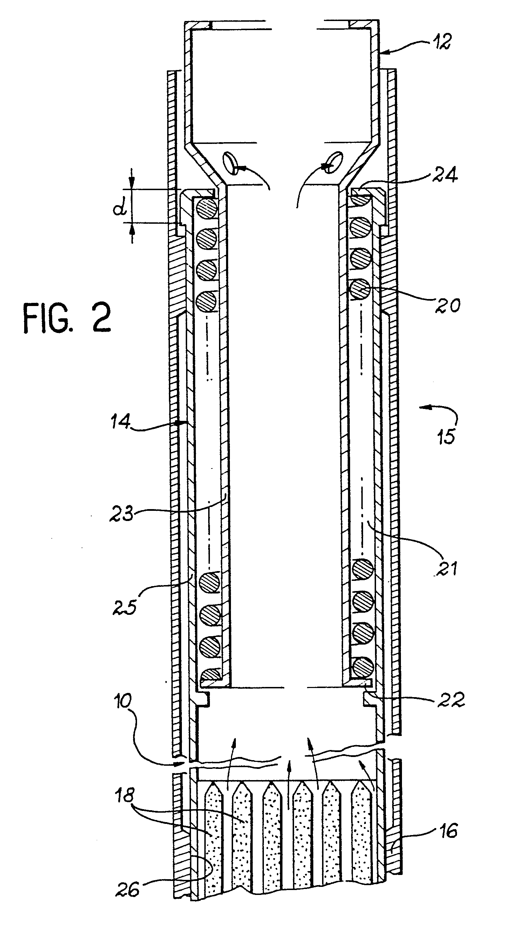

Dans le mode de réalisation représenté sur la figure 2, une partie importante de la résistance hydraulique sensible au débit du fluide primaire est formée à l'extrémité inférieure du corps 14 (voir figure 1). De plus, les moyens de liaison 15 sont constitués par un ressort hélicoïdal 20 qui est placé dans l'espace annulaire compris entre une collerette 22 de la tête 12 et une collerette 24 du corps 14. De façon plus précise, le ressort hélicoïdal 20 est monté autour d'une partie tubulaire 23 de la tête de barre 12 et à l'intérieur d'une partie tubulaire 25 du corps de barre 14 et il est en appui respectivement par ses extrémités inférieure et supérieure sur les collerettes 22 et 24. Ainsi, dans la variante de réalisation représentée sur la figure 2, le ressort 20 travaille à la compression sous l'effet du poids propre du corps de barre 14. Lorsque le débit du fluide de refroidissement dans le coeur atteint sa valeur nominale, l'action du poids du corps de barre 14 sur le ressort 20 est diminuée de la force de soulèvement hydraulique, entraînant un déplacement du corps de barre 14 en position haute. Une chute du débit de fluide dans le coeur a pour effet d'amener le corps de barre dans une position basse dans laquelle il n'est plus soumis qu'aux forces antagonistes résultant de l'action du ressort et de son propre poids. Entre ces deux positions extrêmes, séparées par la distance $d$, le corps de barre occupe une position d'autant plus élevée que le débit est important. Bien entendu, contrairement à ce qui est représenté sur les figures, ce débattement $d$ est autorisé lorsque la barre absorbante est remontée dans sont fourreau par le mécanisme qui lui est associé. La distance $d$ est calculée en fonction de l'antiréactivité que l'on souhaite introduire très rapidement dans le coeur en cas de réduction importante du débit de fluide de refroidissement et de défaillance simultanée de la fonction d'arrêt du réacteur. A cet effet, la distance $d$ est calculée pour la position dans laquelle l'efficacité des barres absorbantes est minimale, c'est-à-dire lorsque celles-ci sont en position haute. De plus, il est tenu compte du nombre de barres absorbantes réalisées conformément à l'invention et de leur position dans le coeur du réacteur. Ainsi, pour introduire une antiréactivité de 100 pcm dans les conditions les plus défavorables, la distance $d$ doit être d'environ 2 cm lorsque toutes les barres absorbantes sont conçues conformément à l'invention et d'environ 4 cm lorsque seulement la moitié des barres absorbantes est conçue de cette manière.

Bien entendu, dans une variante de réalisation non représentée, le ressort 20 pourrait travailler à la traction au lieu de travailler à la compression comme on l'a représenté sur la figure 2.

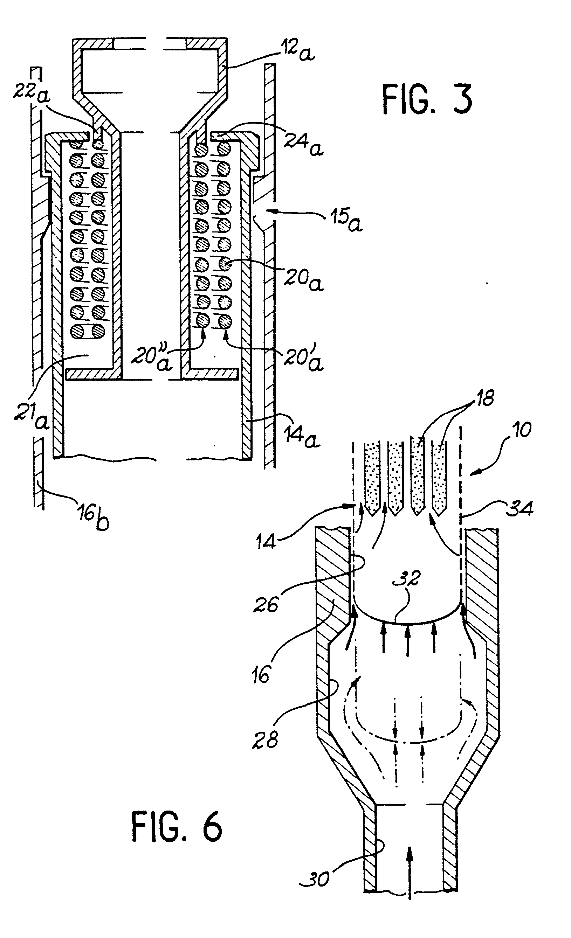

De même, on voit sur la figure 3 que les moyens de liaison 15a peuvent comprendre un ressort hélicoïdal double 20a comprenant une partie externe 20'a qui travaille à la compression et une partie interne 20''a qui travaille à la traction. De façon plus précise, si l'extrémité supérieure de la partie 20'a du ressort est fixée à une collerette 24a du corps 14a de la barre absorbante comme dans le mode de réalisation de la figure 1, l'extrémité inférieure de cette partie 20'a du ressort est reliée à l'extrémité inférieure de la partie 20''a et l'extrémité supérieure de cette dernière est fixée à une partie en saillie 22a de la tête 12a de la barre absorbante au niveau de la collerette 24a. Cette configuration permet d'augmenter la course du ressort sans augmenter sa longueur totale.

Dans les modes de réalisation qui viennent d'être décrits en se référant aux figures 2 et 3, les ressorts 20 et 20a qui définissent une liaison mobile entre la tête et le corps de la barre absorbante sont logés dans un espace annulaire 21, 21a dont les parois sont formées dans le corps 14, 14a et dans la tête 12, 12a. Le volume de cet espace varie donc selon la position occupée par le corps, et il communique avec l'extérieur par des passages de section réduite. L'espace 21, 21a reçoit du fluide de refroidissement et constitue ainsi un amortisseur interdisant tout déplacement saccadé du corps de la barre absorbante en cas de variations brusques du débit.

Bien entendu, au cas où une augmentation accidentelle du débit se produirait dans le coeur du réacteur au cours d'une manutention, il est nécessaire d'éviter l'envol des barres de contrôl. A cet effet, le dimensionnement des barres peut être calculé de telle sorte que le poids apparent du corps de la barre absorbante ne soit pas entièrement annulé au débit maximum. De plus, il faut tenir compte du fait que le poids totale à soulever pour éjecter une barre est supérieur au poids du corps pendu au ressort car il comprend en plus la tête de la barre située en aval du ressort.

En outre, conformément à une caractéristique secondaire de l'invention représentée sur la figure 6, un aménagement hydraulique peut être adopté dans la partie basse du fourreau 16 afin de diminuer la force d'envol lorsque la barre 10 est en position basse. De façon plus précise, on voit sur la figure 6 que le passage 26 formé dans cet assemblage pour recevoir la barre absorbante 10 présente à son extrémité inférieure une partie évasée 28. Le fluide de refroidissement pénètre dans la partie 28 par un passage 30 du pied du fourreau 16, et il circule ensuite de bas en haut comme l'indiquent les flèches. De plus, le corps 14 de la barre absorbante 10 est creux à son extrémité inférieure et définit un fond 32 et une paroi latérale perforée 34. Ainsi, lorsque l'extrémité inférieure du corps 14 est placée au-dessus de la partie évasée 28, le fluide de refroidissement qui arrive par le passage 30 est soumis à une perte de charge élevée et agit essentiellement sur la face inférieure de la paroi 32 pour solliciter le corps 14 vers le haut. Cette situation est représentée en traits pleins sur la figure 6. Par contre, lorsque la partie inférieure du corps 14 est située dans la partie évasée 28 comme on 1'a représenté en traits mixtes sur la figure 6, le fluide de refroidissement est soumis à une perte de charge plus faible et pénètre plus facilement à l'intérieur du corps 14 par les perforations de la paroi 34 et agit sur la face supérieure de la paroi 32 de façon à s'opposer à la montée du corps 14 de la barre absorbante. Cette situation est représentée en traits mixtes sur la figure 6.

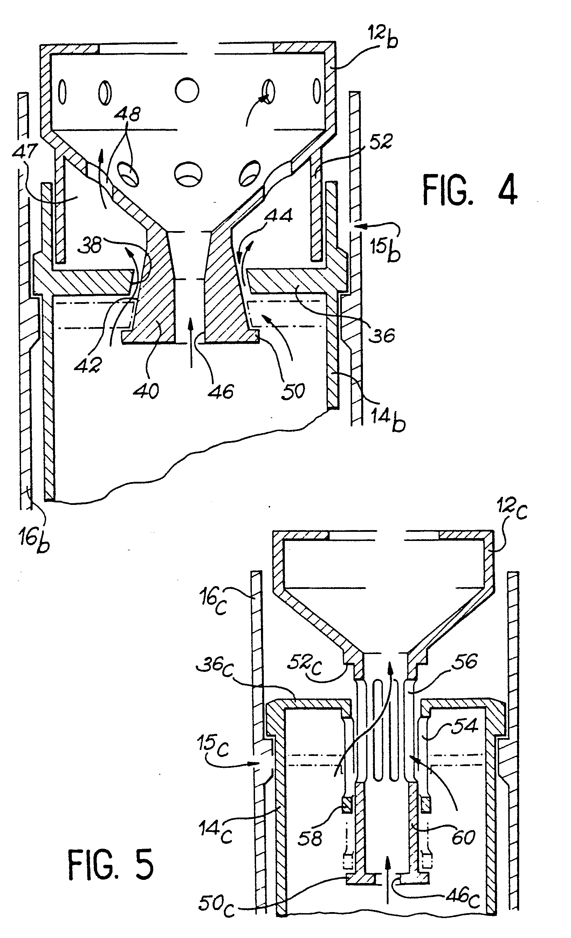

On a représente sur la figure 4 un deuxième mode de réalisation de l'invention selon lequel les moyens de liaison 15b ne sont plus constitués par un ressort mais par un passage 44 de section variable dans lequel on fait passer le fluide de refroidissement entre la tête 12b et le corps 14b de la barre absorbante. De façon plus précise, on voit sur la figure 4 que le corps 14b comporte à proximité de son extrémité supérieure une plaque horizontale 36 percée en son centre par un orifice tronconique 38 dont la largeur va en diminuant du bas vers le haut. La tête 12b de la barre absorbante présente une partie centrale 40 qui fait saillie vers le bas au travers de l'orifice 38 et dont la surface extérieure tronconique 42 est sensiblement parallèle à la paroi de l'orifice 38 pour définir avec ce dernier le passage 44 dont la section varie selon la position du corps 14b par rapport à la tête 12b de la barre absorbante. La partie 40 de la tête de la barre est percée d'un trou central 46 laissant passer une partie du fluide de refroidissement qui circule dans la barre. Le reste du fluide traverse le passage 44 dont la section de passage varie avec la position verticale du corps de barre 14b par rapport à la tête 126. Le fluide arrive ensuite dans une chambre 47, d'ou il s'échappe par de larges ouvertures 48. Une partie tubulaire 52 peut être prévue pour assurer le guidage entre le corps de barre 14b et la tête 12b, et pour constituer une butée limitant le déplacement du corps de barre vers le haut. Les déplacements verticaux du corps 14b par rapport à la tête 12b sont limités vers le bas par une collerette 50 formée à l'extrémité inférieure de la partie 40 de la tête 12b de façon à pouvoir venir en appui contre la plaque 36.

Comme on le voit sur la figure 4, le fluide de refroidissement circule dans le corps 14b et agit sur la face inférieure de la plaque 36 de façon à solliciter le corps 14b vers le haut jusqu'à ce qu'il vienne en butée contre l'extrémité de la partie 52 lorsque le débitatteint sa valeur nominale. Cet effet est obtenu par suite de la différence de pression qui existe entre les faces inférieure et supérieure de la plaque 36 en raison de la section relativement réduite du passage 44. Lorsque le débit du fluide de refroidissement diminue, la différence entre ces pressions a tendance à diminuer, ce qui entraîne un abaissement du corps 14b et une diminution de la section du passage 44 en raison du caractère tronconique de l'orifice 38 et de la surface 42. Si la diminution de débit n'est pas trop forte, le corps de barre se stabilise à une nouvelle position telle que la différence de pression de part et d'autre de la plaque 36 soit la même qu'avant. Si la diminution du débit est plus importante, cet équilibre ne s'établit pas et la plaque 36 vient alors en appui contre le rebord 50 de la partie 40.

Comme dans les variantes de réalisation des figures 2 et 3, la source totale du corps 14b est calculée en fonction de la réactivité que l'on souhaite introduire dans le coeur. Ainsi, elle peut être d'environ 2 cm lorsque toutes les barres absorbantes sont réalisées conformément à l'invention. Bien entendu, il est facile d'augmenter cette course sans midifier la hauteur de l'assemblage en adoptant un angle d'inclinaison de l'orifice 38 et de la surface 42 plus petit.

Sur la figure 5, on a représenté une variante du mode de réalisation de la figure 4 dans lequel la variation du débit du fluide de refroidissement en fonction du déplacement du corps 14c par rapport à la tête 12c de la barre absorbante est obtenue au moyen d'ouvertures oblongues en vis-à-vis 54 et 56 formés respectivement dans des parties tubulaires verticales et coaxiales 58 et 60 du corps 14c et de la tête 12c. Le maintien vers le haut du corps 14c est alors obtenu par l'action du fluide de refroidissement sur la face inférieure d'une plaque horizontale 36c formée à l'extrémité supérieure du corps 14c et joignant l'enveloppe tubulaire externe de ce dernier à la partie tubulaire 58. La partie tubulaire 60 de la tête 12c traverse la partie tubulaire 58 et présente à chacune de ses extrémités des butées 50c et 52c limitant la course du corps 14c. Comme dans la variante de la figure 4, une ouverture centrale 46c est formée à l'extrémité inférieure de la partie tubulaire 60 pour permettre à une partie du fluide de refroidissement de passer directement au-dessus de la barre absorbante. Cette ouverture est nécessaire afin de ne jamais annuler le débit de refroidissement dans la barre absorbante.

Le fonctionnement de la variante représentée sur la figure 5 est pratiquement identique à celui de la variante de la figure 4.

**Revendications**

1. Barre absorbance prévue pour être introduite dans le coeur d'un réacteur nucléaire refroidi par un fluide pour abaisser la réactivité, ladite barre comprenant un corps de barre (14, 14a, 14b, 14c) contenant une partie absorbante (18) et une tête de barre (12, 12a, 12b, 12c) par laquelle le corps de barre peut être suspendu à un mécanisme de pilotage (13) apte à commander la montée et la descente de la barre absorbante dans le coeur ainsi que le décrochage de la barre absorbante, permettant la chute de cette dernière dans le coeur, caractérisée en ce que le corps de barre est mobile par rapport à la tête de barre et relié à cette dernière par des moyens de liaison par sustentation (15, 15a, 15b, 15c) dont l'effet combiné à celui de la résistance hydraulique du corps de barre (14, 14a, 14b, 14c) fait correspondre à chaque valeur du débit du fluide dans le coeur une position relative bien déterminée entre le corps de barre et la tête de barre, cette position du corps de barre étant d'autant plus élevée, c'est à dire corps d'autant plus rapproché de la tête, que le débit est important.

2. Barre absorbante selon la revendication 1, caractérisé en ce que lesdits moyens de liaison par sustentation (15, 15a) comprennent des moyens élastiques (20, 20a) prévus entre la tête et le corps de barre pour solliciter ce dernier vers le haut à l'encontre de la force de gravité résultant, du poids du corps de barre ceci entre une position basse c'est à dire corps éloigné de la tête et une position haute c'est à dire corps rapproché de la tête selon que le débit du fluide dans le coeur est nul ou atteint sa valeur nominale.

3. Barre absorbante selon la revendication 2, caractérisée en ce que les moyens élastiques sont constitués par un ressort hélicoïdal (20) dont les extrémités sont reliées respectivement au corps de barre et à la tête de barre.

4. Barre absorbante selon la revendication 2, caractérisée en ce que les moyens élastiques sont constitués par un ressort hélicoïdal double (20a) comprenant une partie (20'a) qui travaille à la compression et une partie (20''a) qui travaille à la traction, ces deux parties étant disposées de façon concentrique et reliées entre elles par une de leurs extrémités, l'autre extrémité de chacune desdites parties étant reliée respectivement au corps de barre et à la tête de barre.

5. Barre absorbante selon l'une quelconque des revendications 2 à 4, caractérisée en ce que les moyens élastiques (20, 20a) sont logés dans un espace (21, 21a) rempli de fluide de refroidissement formant amortisseur.

6. Barre absorbante selon la revendication 1, caractérisée en ce que lesdits moyens de liaison par sustentation (15b, 15c) sont hydrauliques et comprennent au moins un passage (44, 54, 56) dans lequel circule le fluide de refroidissement en aval de ladite surface (36, 36c), la section de ce passage allant en diminuant lorsque le corps de barre (14, 14c) se déplace vers le bas par rapport à la tête de barre.

7. Barre absorbante selon la revendication 6, caractérisée en ce que ledit passage (44) est défini entre des surfaces coniques (38, 42) de la tête de barre et du corps de barre.

8. Barre absorbante selon la revendication 6, caractérisée en ce que ledit passage est défini par des ouvertures oblongues en vis-à-vis (54, 56) formées respectivement dans une portion cylindrique (58) du corps de barre et dans une portion cylindrique (60) de la tête de barre.

9. Barre absorbante selon l'une quelconque des revendications précédentes, caractérisée en ce qu'elle est placée dans un fourreau (16) présentant à son extrémité inférieure une partie évasée (28) à perte de charge réduite s'opposant au soulèvement de la barre.

**Patentansprüche**

1. Absorberstab, der zum Einführen in den durch ein Fluide gekühlten Kern eines Kernreaktors vorgesehen ist, um die Reaktivität zu verringern, wobei der Stab einen Stabkörper (14, 14a, 14b, 14c), der einen absorbierenden Abschnitt (18) enthält, und einen Stabkopf (12, 12a, 12b, 12c) umfaßt, mit dem der Stabkörper an einen Lenkmechanismus (13) gehängt werden kann, mit dem das Anheben und Absenken des Absorberstabes in dem Kern sowie das Abkoppeln des Absorberstabes steuerbar ist, welches dessen Herunterfallen in den Kern ermöglicht, dadurch gekennzeichnet, daß der Stabkörper in Bezug auf den Stabkopf beweglich und mit letzterem durch Mittel zum Verbinden mittels Schweben (15, 15a, 15b, 15c) verbunden ist, deren mit dem Strömungswiderstand des Stabkörpers (14, 14a, 14b, 14c) kombinierte Wirkung jedem Wert der Strömungsmenge des Fluids in dem Kern eine relative, wohlbestimmte Lage zwischen dem Stabkörper und dem Stabkopf entsprechen läßt, wobei diese Lage des Stabkörpers umso höher ist, d.h. der Körper ist dem Kopf umso näher, je größer die Strömungsmenge ist.

2. Absorberstab nach Anspruch 1, dadurch gekennzeichnet, daß die Mittel zum Verbinden durch Schweben (15, 15a) elastische Mittel (20, 20a) umfassen, die zwischen dem Kopf und dem Körper des Stabes vorgesehen sind, um diesen letzteren nach oben entgegen der sich aus dem Gewicht des Körpers des Stabes ergebenden Erdanziehungskraft zu belasten, nämlich zwischen einer unteren Lage, d.h. der Körper ist von dem Kopf entfernt, und einer oberen Lage, d.h. der Körper ist dem Kopf angenähert, in Abhängigkeit davon, ob die Fluidströmungsmenge in dem Kern Null ist oder ihren nominalen Wert erreicht.

3. Absorberstab nach Anspruch 2, dadurch gekennzeichnet, daß die elastischen Mittel von einer Schraubenfeder (20) gebildet sind, deren Enden mit dem Stabkörper bzw. dem Stabkopf verbunden sind.

4. Absorberstab nach Anspruch 2, dadurch gekennzeichnet, daß die elastischen Mittel von einer doppelten Schraubenfeder (20a) gebildet sind, die einen Teil (20′a), der auf Druck beanspruchbar ist, und einen Teil (20″a) aufweist, der auf Zug beanspuchbar ist, wobei die zwei Teile konzentrisch angeordnet und miteinander durch eines ihrer Enden verbunden sind und das andere Ende eines jeden Teiles mit dem Stabkörper bzw. dem Stabkopf verbunden ist.

5. Absorberstab nach einem der Ansprüche 2 bis 4, dadurch gekennzeichnet, daß die elastischen Mittel (20, 20a) in einem Raum (21, 21a) untergebracht sind, der mit dem eine Dämpfung bildenden Kühlfluid gefüllt ist.

6. Absorberstab nach Anspruch 1, dadurch gekennzeichnet, daß die Mittel zum Verbinden durch Schweben (15b, 15c) hydraulische sind und wenigstens eine Durchlaß (44, 54, 56) umfassen, in dem das Kühlfluid stromaufwärts der Oberfläche (36, 36c) strömt, wobei sich der Querschnitt dieses Durchlasses verringert, wenn sich der Stabkörper (14, 14c) nach unten in Bezug auf den Stabkopf verschiebt.

7. Absorberstab nach Anspruch 6, dadurch gekennzeichnet, daß der Durchlaß (44) von zwei konischen Oberflächen (38, 42) des Stabkopfes und des Stabkörpers begrenzt ist.

8. Absorberstab nach Anspruch 6, dadurch gekennzeichnet, daß der Durchlaß durch längliche, einander gegenüberliegende Öffnungen (54, 56) begrenzt ist, die in einem zylindrischen Abschnitt (58) des Stabkörpers und einem zylindrischen Abschnitt (60) des Stabkopfes gebildet sind.

9. Absorberstab nach einem der vorhergehenden Ansprüche, dadurch gekennzeichnet, daß er in einer Hülse (16) angeordnet ist, die an ihrem unteren Ende einen konisch erweiterten Abschnitt (28) für einen verringerten Druckverlust aufweist, der sich dem Anheben des Stabes entgegensetzt.

**Claims**

1. Absorbing rod intended to be introduced into the core of a nuclear reactor cooled by a fluid in order to reduce the reactivity, the said rod comprising a rod body (14, 14a, 14b, 14c) containing an absorbing part (18) and a rod head (12, 12a, 12b, 12c) by means of which the rod body may be suspended from a guide mechanism (13) capable of controlling the raising and the lowering of the absorbing rod in the core as well as the uncoupling of the absorbing rod, permitting the fall of the latter into the core, characterized in that the rod body is movable relative to the rod head and connected to the latter by means for linking by lifting (15, 15a, 15b, 15c), the effect of which, combined with that of the hydraulic resistance of the rod body (14, 14a, 14b, 14c) causes a well-defined relative position between the rod body and the rod head, to correspond to each value of the flow rate of the fluid in the core, this position of the rod body being the higher, that is to say the body being closer to the head, the greater the flow rate.

2. Absorbing rod according to Claim 1, characterized in that the said means for linking by lifting (15, 15a) comprise elastic means (20, 20a) provided between the rod head and the rod body to urge the latter in an upward direction against the force of gravity resulting from the weight of the rod body, this taking place between a low position, that is to say a position in which the body is remote from the head, and a high position, that is to say a position in which the body is close to the head, according as the flow rate of the fluid in the core is zero or reaches its nominal value.

3. Absorbing rod according to Claim 2, characterized in that the elastic means comprise a helical spring (20), the ends of which are connected to the rod body and to the rod head respectively.

4. Absorbing rod according to Claim 2, characterized in that the elastic means comprise a double helical spring (20a) comprising a part (20′a) which operates in compression and a part (20″a) which operates in traction, these two parts being disposed in a concentric manner and connected to one another by one of their ends, the other end of each one of the said parts being connected to the rod body and to the rod head respectively.

5. Absorbing rod according to any one of Claims 2 to 4, characterized in that the elastic means (20, 20a) are accommodated in a space (21, 21a) filled with cooling fluid forming a shock absorber.

6. Absorbing rod according to Claim 1, characterized in that the said means for linking by lifting (15b, 15c) are hydraulic and include at least one passage (44, 54, 56) in which the cooling fluid circulates downstream of the said surface (36, 36c), the cross-section of this passage proceeding to diminish when the rod body (14, 14c) is displaced in a downward direction relative to the rod head.

7. Absorbing rod according to Claim 6, characterized in that the said passage (44) is defined between conical surfaces (38, 42) of the rod head and of the rod body.

8. Absorbing rod according to Claim 6, characterized in that the said passage is defined by oblong apertures (54, 56) which are disposed opposite one another and which are formed in a cylindrical portion (58) of the rod body and in a cylindrical portion (60) of the rod head respectively.

9. Absorbing rod according to any one of the preceding claims, characterized in that it is placed in a sheath (16) exhibiting at its lower end a widened part (28) of reduced pressure drop opposing the raising of the rod.

FIG. 1a

FIG. 1b

FIG. 2

0 064 430

FIG. 3

FIG. 6

4

FIG. 4

FIG. 5